# EUROPÄISCHE PATENTSCHRIFT

(11) **EP 2 393 685 B1**
(45) Veröffentlichungstag und Bekanntmachung des Hinweises auf die Patenterteilung: **08.05.2013**
(21) Anmeldenummer: 10702833.4
(22) Anmeldetag: 02.02.2010
(51) Int. Cl.: B60K 1/04, H01M 10/50, H01M 2/10

(54) **BATTERIEAUFNAHMEVORRICHTUNG**
BATTERY RECEIVING DEVICE
SYSTÈME RÉCEPTEUR DE BATTERIE

(30) Priorität: 04.02.2009 DE 102009007422
(43) Veröffentlichungstag der Anmeldung: 14.12.2011
(73) Patentinhaber: Li-tec Battery GmbH, 01917 Kamenz (DE)
(72) Erfinder: LACHENMEIER, Walter, 53757 Sankt Augustin (DE); GUTSCH, Andreas, 59348 Lüdinghausen (DE); SCHÄFER, Tim, 99768 Harztor (DE)
(74) Vertreter: Wallinger, Michael
(86) Internationale Anmeldenummer: PCT/EP2010/000624
(87) Internationale Veröffentlichungsnummer: WO 2010/089079

(56) Entgegenhaltungen:
- EP-A1- 0 574 281
- DE-A1- 4 032 605
- DE-C1- 4 235 394
- IT-B- 1 060 639
- JP-A- 6 048 185

## Beschreibung

Die vorliegende Erfindung betrifft eine Batterieaufnahmevorrichtung für wenigstens eine Batterie. Die Erfindung wird im Zusammenhang mit wiederaufladbaren Lithium-Ionen-Batterien und Kraftfahrzeugen beschrieben. Es wird darauf hingewiesen, dass die Erfindung auch unabhängig von der Bauart der Batterie, der Chemie der Batterie oder der Art des Verbrauchers Verwendung finden kann.

Aus dem Stand der Technik sind Batterien mit formsteifen Gehäusen in Kraftfahrzeugen bekannt. Auch sind dünnwandige Gehäuse bekannt, welche sich an die elektrochemischen Bauteile der Batterie anschmiegen bzw. sich an diesen Bauteilen abstützen. Bei einem heftigen Stoß, etwa bei einem Unfall des Kraftfahrzeugs, kann das Batteriegehäuse brechen und Chemikalien der Batterie können in die Umgebung austreten. Auch wenn ein Fremdkörper in den von der Batterie besetzten Raum eindringt, kann ein Batteriegehäuse brechen. Eine Batterieaufnahmevorrichtung mit den Merkmalen des Oberbegriffs des Anspruchs 1 zeigt die DE 40 32 605 A1.

Der Erfindung liegt daher die Aufgabe zugrunde, die Neigung eines Batteriegehäuses zum Bruch bei einem heftigen Stoß oder bei Eindringen eines Fremdkörpers zu verringern.

Diese Aufgabe wird erfindungsgemäß durch die Gegenstände der unabhängigen Ansprüche erreicht. Zu bevorzugende Weiterbildungen der Erfindung sind Gegenstand der Unteransprüche.

Eine erfindungsgemäße Batterieaufnahmevorrichtung weist einen Batterieaufnahmeraum und eine Wandung auf, welche den Batterieaufnahmeraum wenigstens teilweise umgibt. Weiter weist die Batterieaufnahmevorrichtung eine verschließbare erste Öffnung auf, welche der Wandung zugeordnet ist. Ferner weist die Batterieaufnahmevorrichtung eine Batteriehalteeinrichtung auf, welche vorgesehen ist, wenigstens eine Batterie zu halten. Die erfindungsgemäße Batterieaufnahmevorrichtung zeichnet sich dadurch aus, dass deren Batteriehalteeinrichtung so gestaltet ist, dass die wenigstens eine Batterie bei vorbestimmten Bedingungen freigegeben wird.

Im Sinne der Erfindung ist unter einer Batterieaufnahmevorrichtung eine Vorrichtung zu verstehen, welche wenigstens zeitweise wenigstens eine Batterie aufnimmt. Die Batterieaufnahmevorrichtung nimmt bevorzugt zeitgleich mehrere Batterien auf, sofern mehrere Batterien zum Antrieb eines Verbrauchers erfordert, insbesondere zur Versorgung eines Kraftfahrzeugantriebs elektrisch verschaltet sind. Bevorzugt sind eine Hauptbatterie und eine Reservebatterie zeitgleich von der Batterieaufnahmevorrichtung aufgenommen.

Im Sinne der Erfindung ist unter einem Batterieaufnahmeraum ein Raum zu verstehen, in dem die von der Batterieaufnahmevorrichtung aufzunehmenden Batterien angeordnet sind. Größe und Gestalt des Batterieaufnahmeraums sind auch durch die aufzunehmenden Batterien bestimmt. Vorzugsweise ist der Batterieaufnahmeraum nur geringfügig größer, als das Volumen der aufzunehmenden Batterien. Sofern die Batterieaufnahmevorrichtung mehrere Batterien aufnimmt, gewinnt der Batterieaufnahmeraum seine Gestalt auch abhängig von der räumlichen Anordnung der aufgenommenen Batterien zueinander. Der Batterieaufnahmeraum ist bevorzugt lang gestreckt und weist eine im Wesentlichen prismatische oder zylindrische Grundfläche auf. Bevorzugt ist der Batterieaufnahmeraum flach im Vergleich zu seinen waagerechten Abmessungen ausgebildet und weist eine im Wesentlichen prismatische oder zylindrische Grundfläche auf.

Im Sinne der Erfindung ist unter der Wandung der Batterieaufnahmevorrichtung ein insbesondere dünnwandiger Mantel zu verstehen, welcher den Batterieaufnahmeraum umgibt und begrenzt. Vorzugsweise umgibt die Wandung den Batterieaufnahmeraum nur teilweise. Vorzugsweise ist die Wandung teilweise durchbrochen bzw. mit Fenstern versehen. So wird die Durchströmung des Batterieaufnahmeraums mit einem Kühlmittel ermöglicht. Vorzugsweise weist die Wandung wenigstens einen Verbindungsbereich auf. Dieser ist auch zur Verbindung mit dem Kraftfahrzeug vorgesehen.

Im Sinne der Erfindung ist unter einer verschließbaren ersten Öffnung eine Einrichtung zu verstehen, welche bei Bedarf auch das Einsetzen von Batterien in den Batterieaufnahmeraum bzw. die Entnahme von Batterien ermöglicht. Vorzugsweise ist die verschließbare erste Öffnung Teil der Wandung. Vorzugsweise ist die Öffnung durch einen Deckel, einen Riegel oder einen Deckel mit Verriegelung versperrt, so dass beispielsweise eine Batterie den Batterieaufnahmeraum nicht unbeabsichtigt verlassen kann. Die Öffnung ist so wenigstens so groß wie die Querschnittsfläche des größten Körpers, welcher dem Batterieaufnahmeraum zugeführt werden soll. Die verschließbare erste Öffnung ist vorzugsweise in einem Bereich des Batterieaufnahmeraums angebracht, der von außen gut zugänglich ist und ein einfaches Einsetzen bzw. Entnehmen von Körpern, insbesondere einer Batterie ermöglicht.

Im Sinne der Erfindung ist unter einer Batteriehalteeinrichtung eine Einrichtung zu verstehen, welche wenigstens eine Batterie wenigstens zeitweise hält. Eine Batteriehalteeinrichtung hält bevorzugt gleichzeitig mehrere Batterien und/oder bewahrt diese Batterien vor ungeplanter Verlagerung. Bevorzugt weist die Batteriehalteeinrichtung Führungsmittel zur Führung einer Bewegung einer Batterie aufweisen. Bevorzugt ergänzt die Batteriehalteeinrichtung die Wandung zum vollständigen Umschließen des Batterieaufnahmeraums.

Im Sinne der Erfindung ist unter Halten einer Batterie zu verstehen, dass die Batterie wenigstens zeitweise gegen ungeplante Verlagerung gesichert ist. Dazu können Rast- oder Klemmmittel dienen, welche die Batterien bevorzugt kraft- oder formschlüssig an dem jeweiligen vorgesehenen Ort festhalten. Diese Haltemittel der Batteriehalteeinrichtung wirken so, dass sie eine Batterie bei vorbestimmten Bedingungen freigeben. Mit der Freigabe endet die kraft- und/oder formschlüssige Verbindung einer Batterie mit der Batteriehalteeinrichtung. Die vorbestimmten Bedingungen bedeuten das Vorliegen von Umständen, welche zu einer Beschädigung eines Batteriegehäuses führen können. Zu diesen vorbestimmten Bedingungen gehören auch eine mindeste Beschleunigung bzw. Kraft oder das Eindringen eines Fremdkörpers in den von einer Batterie besetzen Raum.

Zu den Rast- oder Klemmmitteln im Sinne der Erfindung zählen auch Klinken, Kerbzähne, Keilzähne, Nocken, Bolzen, Stifte oder Klemmleisten. Diese sind bevorzugt der Batteriehalteeinrichtung zugeordnet. Auch geometrisch unbestimmte Gestalten können zur Einstellung einer Reibkraft bzw. Losbrechkraft dienen, wie beispielsweise eine bestimmte Oberflächenrauhheit. Bevorzugt weist die wenigstens eine Batterie mit den Rast- oder Klemmmitteln mechanisch wechselwirkende Einrichtungen auf. Bevorzugt ist die wenigstens eine Batterie stoffschlüssig mit der Batteriehalteeinrichtung verbunden, beispielsweise durch eine Klebverbindung.

Indem die wenigstens eine Batterie freigegeben wird, ist auch die durch einen Stoß verursachte Beschleunigung der Batterie und /oder die Einwirkdauer der Beschleunigung auf die Batterie verringert. Die mechanische Beanspruchung des Batteriegehäuses ist ebenfalls verringert. Nach Ihrer Freigabe kann die Batterie einem eindringenden Körper ausweichen. So wird die Neigung eines Batteriegehäuses zum Bruch vermindert und die zugrunde liegende Aufgabe gelöst. Nachfolgend werden zu bevorzugende Weiterbildungen der Erfindung beschrieben.

Vorteilhaft ist die Batteriehalteeinrichtung wenigstens teilweise in dem Batterieaufnahmeraum angeordnet. Vorzugsweise ist die Batteriehalteeinrichtung wenigstens teilweise von der Wandung umgeben.

Vorteilhaft ist der Batterieaufnahmevorrichtung ein Ausweichbereich zugeordnet. Vorzugsweise erstreckt sich die Batteriehalteeinrichtung wenigstens teilweise in den Ausweichbereich. Nach der Freigabe einer Batterie durch die Batteriehalteeinrichtung kann die Batterie wenigstens teilweise in den Ausweichbereich verlagert werden. Die Verlagerung geschieht beispielsweise in Folge einer Beschleunigung oder eines durch einen Fremdkörper aufgeprägten Wegs. Der aufgeprägte Weg kann eine Folge einer durch einen Unfall hervorgerufenen Verformung der Karosserie des Kraftfahrzeugs sein. Bevorzugt schließt sich der Ausweichbereich räumlich an den Batterieaufnahmeraum an. Bevorzugt ist der Ausweichbereich innerhalb des Batterieaufnahmeraums angeordnet. Dabei ist der Ausweichbereich vorzugsweise in Richtung der erwarteten Beschleunigung bzw. des aufgeprägten Wegs angeordnet. Der Ausweichbereich nimmt vorzugsweise auch mehrere Batterien auf.

Vorteilhaft weist die Wandung einen Durchlass auf. Der Durchlass ist dabei so bemessen, dass eine Batterie durch den Durchlass verlagert werden kann. Es ist ausreichend, dass der Durchlass zum Zeitpunkt der Verlagerung einer Batterie besteht. Beispielsweise wird der Durchlass erst bei Verlagerung der wenigstens einen Batterie geschaffen. Beispielsweise ist die Wandung mit einer geschlossenen linienförmigen Dünnstelle, einer Perforation oder mehreren Schlitzen versehen. Bei einer vorbestimmten Kraft gibt diese Dünnstelle, Perforation oder Schlitze nach. Ein Teil der Wandung löst sich vom Rest der Wandung und bildet so einen Durchlass. Auch kann der Durchlass in der Wandung ständig ausgebildet sein. Vorzugsweise fehlt eine Begrenzungsfläche einer beispielsweise quaderförmigen Wandung.

Erfindungsgemäß nimmt der Batterieaufnahmeraum einen Verformungskörper auf. Dieser kann in räumlicher Nähe wenigstens einer Batterie oder diese Batterie berührend angeordnet sein. Der Verformungskörper dient auch zur Aufnahme von Energie durch elastische oder plastische Verformung. Die einwirkende Energie kann als Formänderungsenergie auf den Verformungskörper wirken. So kann der Verformungskörper wenigstens einen Teil der bei einem Unfall frei werdenden Energie aufnehmen und von der wenigstens einen Batterie fernhalten. Der Verformungskörper ist bevorzugt auswechselbar. Die Anordnung des Verformungskörpers in Bezug auf die wenigstens eine Batterie ist abhängig von der erwarteten Beschleunigung oder Verformung.

Vorteilhaft nimmt die Batterieaufnahmevorrichtung zeitgleich mehrere Batterien auf. Diese Batterien können untereinander elektrisch verschaltet sein, beispielsweise als Reihenschaltung und/oder in Parallelschaltung. Die mehreren Batterien sind bevorzugt dicht gepackt und wenigstens teilweise innerhalb des Batterieaufnahmeraums angeordnet. Dabei richtet sich die tatsächliche Anordnung nach den räumlichen Gegebenheiten der Batterieaufnahmevorrichtung.
Die Hauptausdehnungsrichtung des Batterieaufnahmeraums kann entlang der größten Abmessung des Batterieaufnahmeraums verlaufen, beispielsweise in Richtung der längsten Kante des Batterieaufnahmeraums. Die Hauptausdehnungsrichtung kann entlang einer Symmetrieachse oder Längsachse des Batterieaufnahmeraums verlaufen. Beispielsweise sind mehrere Batterien dicht hintereinander entlang der Hauptausdehnungsrichtung der Batterieaufnahmevorrichtung angeordnet und bildet eine Reihe. Bevorzugt beginnt oder endet die Reihe der Batterien mit einem Verformungskörper.

Vorteilhaft ist die Batteriehalteeinrichtung auch zum Austausch von Wärmeenergie mit den aufgenommenen Batterien eingerichtet. Bevorzugt weist die Batteriehalteeinrichtung Einrichtungen zur Vergrößerung der Wärmeaustauschfläche auf. Vorzugsweise weist die Batterieaufnahmevorrichtung wenigstens einen Kühlmittelkanal auf, welcher vorzugsweise von einem Kühlmittel durchströmt wird. Vorzugsweise ist wenigstens ein Kühlkörper der Batteriehalteeinrichtung in Bereichen großer Strömungsgeschwindigkeit des Kühlmittels angeordnet.

Vorteilhaft ist ein Kraftfahrzeug mit einer erfindungsgemäßen Batterieaufnahmevorrichtung ausgestattet. Vorzugsweise ist die Batterieaufnahmevorrichtung mit der Bodengruppe bzw. dem Rahmen des Kraftfahrzeugs verbunden. Die Verbindung ist vorzugsweise stoffschlüssig, beispielsweise durch Kleben oder Schweißen ausgebildet. Auch kann die Verbindung durch Verbindungselemente wie beispielsweise Schrauben oder Niete erfolgen. Vorzugsweise ist die Batterieaufnahmevorrichtung mit einem ausreichend formsteifen Bauteil des Kraftfahrzeugs verbunden. Die Batterieaufnahmevorrichtung kann auch einstückig mit der Bodengruppe bzw. dem Rahmen des Kraftfahrzeugs ausgebildet sein. Die tatsächliche Anordnung der Batterieaufnahmevorrichtung innerhalb des Kraftfahrzeugs richtet sich nach den räumlichen Gegebenheiten und ist abhängig von den Abmessungen sowohl des Kraftfahrzeugs als auch der Batterieaufnahmevorrichtung. Bevorzugt ist die Batterieaufnahmevorrichtung innerhalb des Kraftfahrzeugs so angeordnet, dass auch der Fahrstabilität des Kraftfahrzeugs Rechnung getragen wird. So ist die Batterieaufnahmevorrichtung bevorzugt möglichst tief bezüglich des Kraftfahrzeugs angeordnet. Beispielsweise ist die Batterieaufnahmevorrichtung zwischen den Passagieren im Bereich des Kardantunnels eines heute üblichen Kraftfahrzeugs oder unter den Passagieren angeordnet.

Vorteilhaft sind die Bodengruppe bzw. der Rahmen des Kraftfahrzeugs und/oder die Batterieaufnahmevorrichtung mit einem verstärkten Polymer hergestellt. Bevorzugt ist das Polymer faserverstärkt, besonders bevorzugt finden Textilfasern zur Verstärkung des Polymers Anwendung. Bevorzugt ist die Batterieaufnahmevorrichtung einstückig mit der Bodengruppe bzw. dem Rahmen des Kraftfahrzeugs ausgebildet.

Vorteilhaft ist die Batterieaufnahmevorrichtung innerhalb des Kraftfahrzeugs so angeordnet, dass der Massenschwerpunkt der Batterieaufnahmevorrichtung und der Massenschwerpunkt des Kraftfahrzeugs voneinander nur wenig beanstandet sind. Das gilt insbesondere für einen waagerechten seitlichen Abstand in Bezug auf die Fahrtrichtung des Kraftfahrzeugs. Vorzugsweise beträgt der waagegerechte seitliche Abstand des Massenschwerpunkts der Batterieaufnahmevorrichtung von dem Massenschwerpunkt des Kraftfahrzeugs weniger als ein Zehntel der Länge des Kraftfahrzeugs, besonders bevorzugt weniger als 1/100-tel der Länge des Kraftfahrzeugs.

Vorteilhaft ist der Ausweichbereich in einem Bereich des Kraftfahrzeugs angeordnet, welcher bei einem Unfall nur wenig verformt wird. Sofern die Batterieaufnahmevorrichtung niedrig im Vergleich zu ihren waagerechten Ausdehnungen ausgebildet ist, kann der Ausweichbereich beispielsweise auch unterhalb der hinteren Passagiere oder zwischen den Hinterrädern angeordnet sein. Die tatsächliche Anordnung des Ausweichbereichs ist abhängig von der Bauart des Kraftfahrzeugs und den Verformungseigenschaften der Karosserie, der Bodengruppe bzw. des Rahmens des Kraftfahrzeugs.

Vorteilhaft wird die Klimatisierungseinrichtung des Kraftfahrzeugs zur Temperierung der Batterien verwendet. Dazu ist die Klimatisierungseinrichtung mit der Batteriehalteeinrichtung wirkverbunden. Vorzugsweise weist die Batteriehalteeinrichtung eine Wärmekontaktplatte auf, welche die Batterien wenigstens teilweise, bevorzugt großflächig wärmeleitend berührt. Diese Wärmekontaktplatte weist beispielsweise Kühlkörper auf, welche von einem Kühlmittel angeströmt werden. Beispielsweise weist die Wärmekontaktplatte wenigstens eine Rohrleitung auf, welche von dem Kühlmittel der Klimatisierungseinrichtung wenigstens zeitweise durchströmt wird. Vorzugsweise erfolgt die Verbindung zwischen der Klimatisierungseinrichtung und der Wärmekontaktplatte der Batteriehalteeinrichtung über flexible Rohrleitungen, beispielsweise Schläuche. Abhängig von der Temperaturdifferenz zwischen den Batterien und dem Kühlmittel der Klimatisierungseinrichtung kann den Batterien Wärmeenergie zu- oder aus diesen Batterien abgeführt werden.

Vorteilhaft wird die Batterieaufnahmevorrichtung so betrieben, dass zunächst die wenigstens eine Batterie von der Batteriehalteeinrichtung ortsfest gehalten wird. Auch bei Auftreten einer mindesten Kraft auf die wenigstens eine Batterie gibt die Batteriehalteeinrichtung diese Batterie frei. Die Batterie wird nun nicht mehr ortsfest gehalten und kann der auf sie wirkenden Kraft folgen. Vorzugsweise ist die Bewegung der wenigstens einer Batterie geführt. Vorzugsweise wird die Bewegung der Batterie gebremst, beispielsweise in Folge von Reibung. Dabei legt die Batterie einen vorbestimmten Weg zurück. Nach dem Ausweichen kommt die Batterie wieder zur Ruhe in Bezug auf den Batterieaufnahmeraum. Zu diesem Zeitpunkt kann die Batterie innerhalb der Batteriehalteeinrichtung verlagert worden sein bzw. kann die Batteriehalteeinrichtung teilweise oder vollständig verlassen haben. Auch kann die Batterie wenigstens teilweise in den Ausweichraum verlagert worden sein.

Vorteilhaft wird die Batterieaufnahmevorrichtung bzw. die davon aufgenommenen Batterien auch durch den Rahmen bzw. die Bodengruppe des Kraftfahrzeugs geschützt. Bei einem Unfall wird ein Teil der einwirkenden Energie zunächst durch den Rahmen bzw. die Bodengruppe des Kraftfahrzeugs aufgenommen. Nur ein Rest kann schädigend auf die Batterieaufnahmevorrichtung bzw. die davon aufgenommenen Batterien einwirken.

Weitere Vorteile, Merkmale und Anwendungsmöglichkeiten der Im Sinne der Erfindungen Erfindung ergeben sich aus der nachfolgenden Beschreibung in Zusammenhang mit den Figuren. Es zeigt:
- Fig. 1: eine schematische Draufsicht eines Kraftfahrzeugs mit dessen Rahmen und mit einer erfindungsgemäßen Batterieaufnahmevorrichtung,
- Fig. 2: eine Seitenansicht eines Kraftfahrzeugs mit einer Batterieaufnahmevorrichtung,
- Fig. 3: eine Vorderansicht eines Kraftfahrzeugs mit einer Batterieaufnahmevorrichtung und mit der Bodengruppe des Kraftfahrzeugs,
- Fig. 4: eine Schnittdarstellung einer erfindungsgemäßen Batterieaufnahmevorrichtung,
- Fig. 5: eine perspektivische Darstellung einer erfindungsgemäßen Batterieaufnahmevorrichtung,
- Fig. 6: eine perspektivische Darstellung eines Teils einer erfindungsgemäßen Batterieaufnahmevorrichtung in einer bevorzugten Ausführungsform,
- Fig. 7: eine schematische Draufsicht eines Kraftfahrzeugs mit einer erfindungsgemäßen Batterieaufnahmevorrichtung nach einem Unfall.

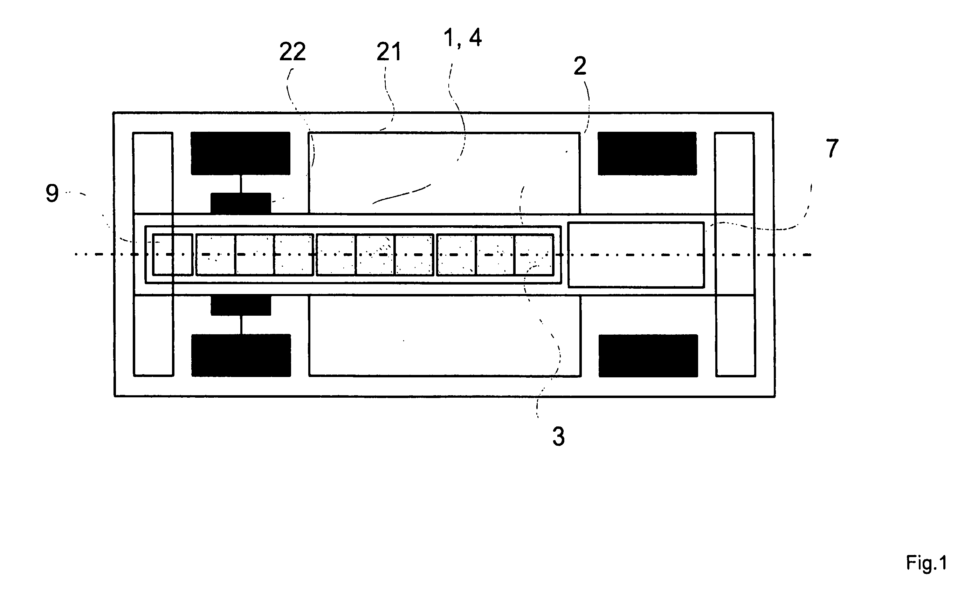

Figur 1 zeigt eine schematische Ansicht von oben auch auf den Rahmen 21 eines Kraftfahrzeugs, welches mit einer erfindungsgemäßen Batterieaufnahmevorrichtung 1 ausgerüstet ist. Das Kraftfahrzeug weist einen elektrischen Antrieb mit zwei Elektromotoren 22 auf. Die Batterieaufnahmevorrichtung 1 ist innerhalb des Rahmens 21 bzw. der Bodengruppe des Kraftfahrzeugs angeordnet. Innerhalb des Batterieaufnahmeraums 2 sind einige Batterien 3 sowie ein Verformungskörper 9 angeordnet. Die Hauptausdehnungsrichtung der Batterieaufnahmevorrichtung 1 ist im Wesentlichen parallel zur Fahrtrichtung bzw. der Längsachse des Kraftfahrzeugs ausgerichtet. Der Batterieaufnahmevorrichtung 1 ist ein Ausweichbereich 7 zugeordnet. Dieser ist in Fahrtrichtung hinter der Batterieaufnahmevorrichtung 1 angeordnet. Die Batterieaufnahmevorrichtung 1 ist innerhalb des Rahmens 21 so angeordnet, dass der waagerechte Abstand des Massenschwerpunkts der Batterieaufnahmevorrichtung von dem Massenschwerpunkt des Kraftfahrzeugs so gering wie möglich ist. Weiter ist die Batterieaufnahmevorrichtung 1 so tief wie möglich innerhalb des Kraftfahrzeugs angeordnet. Das dient der Fahrstabilität des Kraftfahrzeugs.

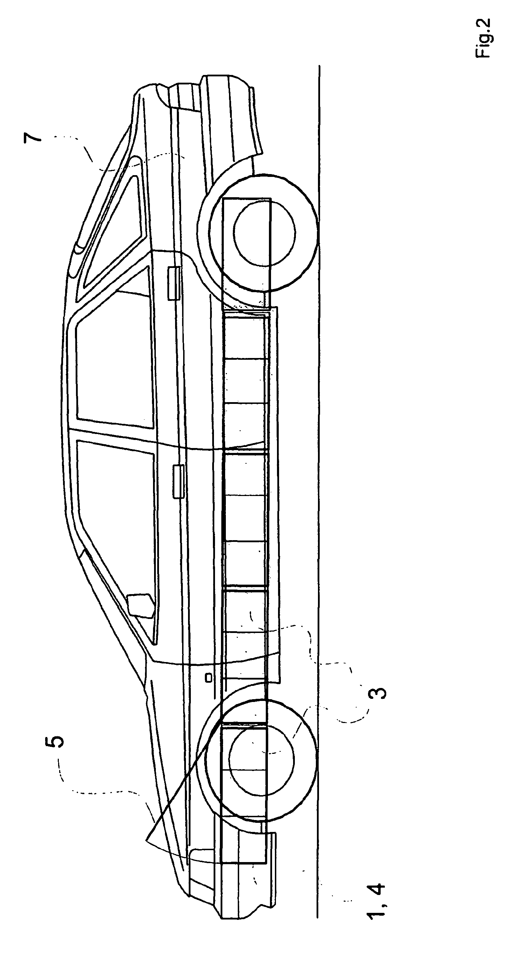

Figur 2 zeigt eine Seitenansicht des Kraftfahrzeugs mit einer erfindungsgemäßen Batterieaufnahmevorrichtung 1. Die Wandung 4 weist eine verschließbare erste Öffnung 5 im Bereich des Vorderwagens auf. Nach Öffnen der verschließbaren Öffnung 5 kann auch eine Batterie 3 eingesetzt oder entnommen werden. Ein Ausweichbereich 7 ist in Fahrtrichtung hinter der Batterieaufnahmevorrichtung 1 angeordnet. Die Batterieaufnahmevorrichtung 1 ist so tief wie möglich innerhalb der Bodengruppe angeordnet.

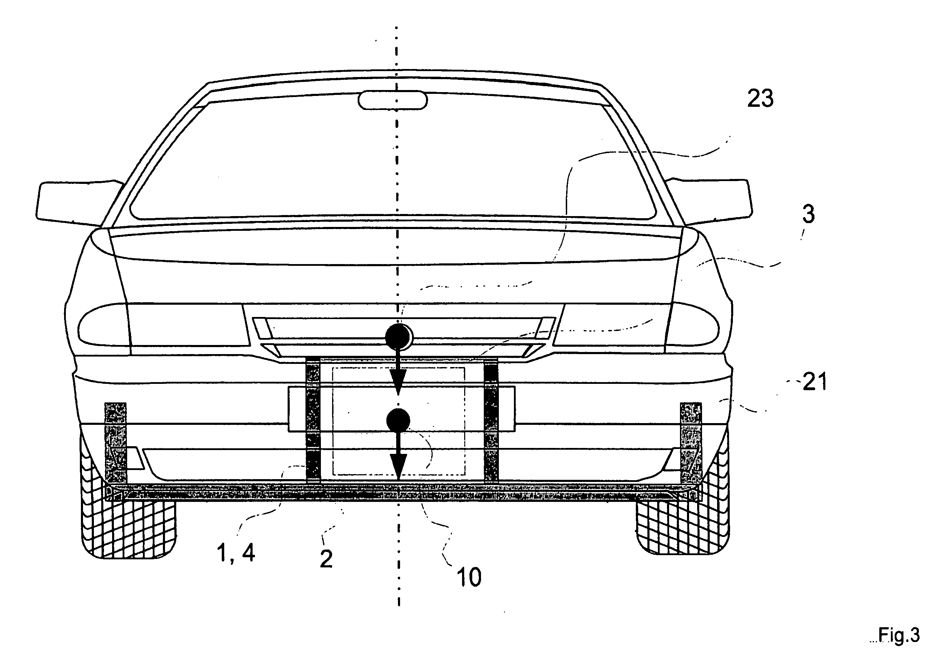

Figur 3 zeigt ein Kraftfahrzeug mit einer erfindungsgemäßen Batterieaufnahmevorrichtung 1, welche mit der Bodengruppe 21 des Kraftfahrzeugs verbunden ist. Sowohl die Wandung 4 der Batterieaufnahmevorrichtung 1 als auch die Bodengruppe 21 des Kraftfahrzeugs weisen ein textilverstärktes Polymer auf. Innerhalb des Batterieaufnahmeraums 2 ist wenigstens eine Batterie 3 angeordnet. Nicht dargestellt ist die Batteriehalteeinrichtung. In der Figur ist eine senkrechte Hilfslinie eingezeichnet, welche sowohl durch den Massenschwerpunkt 10 der Batterieaufnahmevorrichtung 1 und den Massenschwerpunkt 23 des Kraftfahrzeugs verläuft.

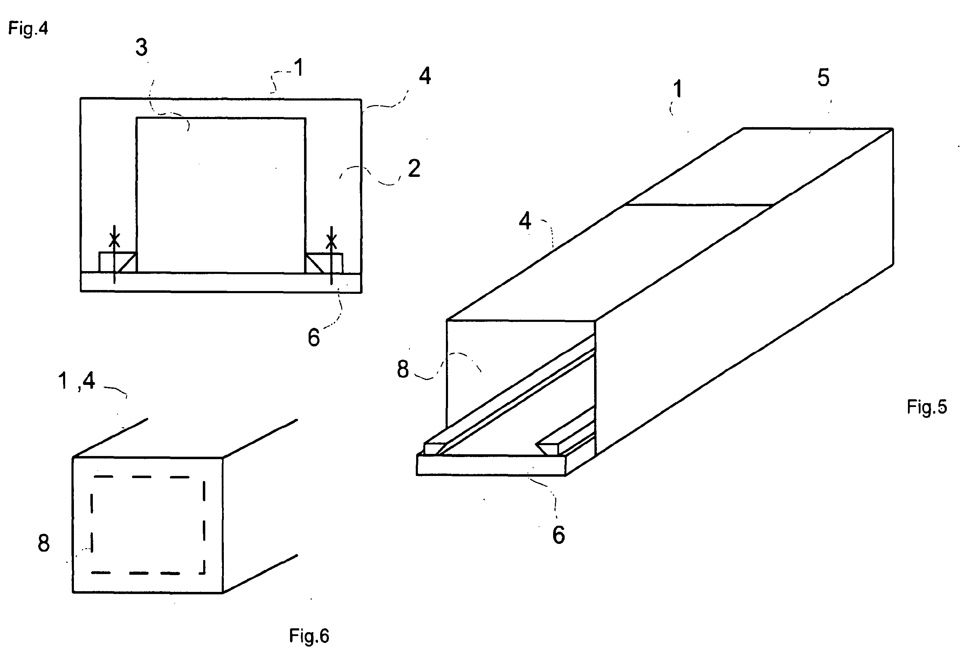

Figur 4 zeigt einen Querschnitt durch eine erfindungsgemäße Batterieaufnahmevorrichtung 1. Innerhalb des Batterieaufnahmeraums 2 ist wenigstens eine Batterie 3 sowie eine Batteriehalteeinrichtung 6 angeordnet. Diese Batteriehalteeinrichtung 6 weist Klemmleisten auf, welche sowohl zum Halten einer Batterie 3 als auch zur Führung einer Bewegung der Batterie 3 dienen. Die Klemmleisten sind mit der Batteriehalteeinrichtung 6 verschraubt. Die wenigstens eine Batterie 3 wird auch mit einer Normalkraft auf die Grundplatte der Batteriehalteeinrichtung 6 gezwängt. Erst mit Überschreiten der Reibkraft, beispielsweise in Folge einer entsprechenden Beschleunigung, kann die Batterie 3 verlagert werden.

Figur 5 zeigt, dass die Batteriehalteeinrichtung 6 sich teilweise aus dem Batterieaufnahmeraum 2 erstreckt. Dieser ist überwiegend von der Wandung 4 umgeben. Die Wandung 4 weist eine verschließbare erste Öffnung 5 auf. Nicht dargestellt ist, der Ausweichbereich 7 in welchen die Batteriehalteeinrichtung 6 sich teilweise erstreckt. Bei entsprechender Verlagerung tritt eine Batterie 3 durch den Durchlass 8 wenigstens teilweise in den nicht dargestellten Ausweichbereich ein.

Figur 6 zeigt eine weitere Ausführung des Durchlasses 8 einer erfindungsgemäßen Batterieaufnahmevorrichtung 1. Der Durchlass entsteht erst mit Verlagerung einer Batterie. Dazu weist die Wandung 4 eine Sollbruchstelle in Gestalt einer umlaufenden Linie bzw. eines umlaufenden Bands auf. Diese Sollbruchstelle versagt bei vorbestimmten Bedingungen, insbesondere bei ausreichender Kraft, welche auf die Sollbruchstelle wirkt und gibt den Durchlass 8 frei.

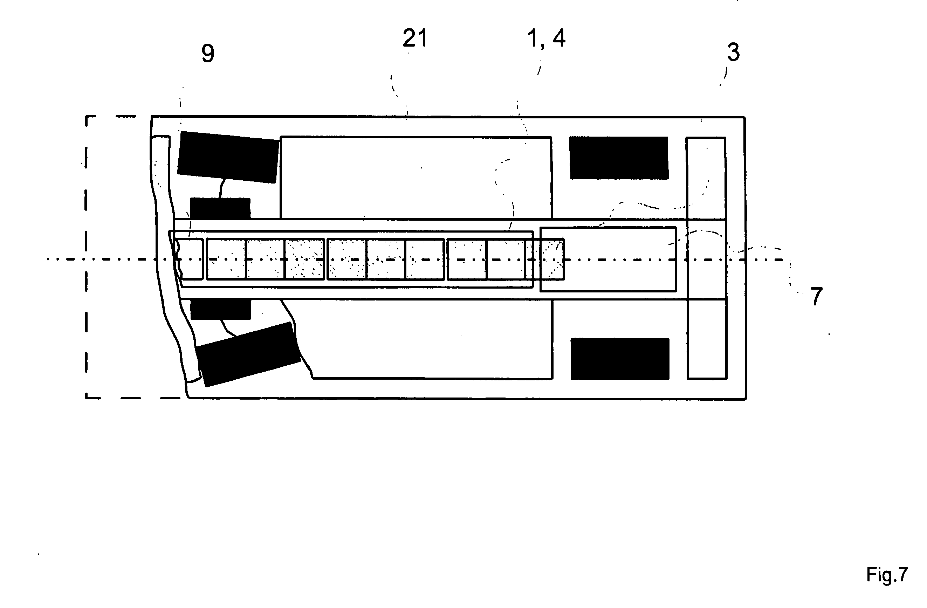

Figur 7 zeigt ein Kraftfahrzeug mit einer erfindungsgemäßen Batterieaufnahmevorrichtung 1 nach einem Unfall. Der Vorderwagen des Kraftfahrzeugs ist als Folge des Unfalls verformt. Dabei ist auch der Rahmen 21 verformt. Es ist dargestellt, dass weiter sowohl die Wandung 4 der Batterieaufnahmevorrichtung 1 als auch der Verformungskörper 9 durch den Unfall deformiert sind. Eine der Batterien 3 ist teilweise in den Ausweichbereich 7 verlagert. Auch die übrigen Batterien sind in Folge des Unfalls verlagert. Mit der Verlagerung ist der schädigende Einfluss von Kräften und Energien aus dem Unfall auf die Batterien 3 verringert. Die Gehäuse der Batterien 3 sind unversehrt, ein Austreten der Chemikalien der Batterien 3 ist vermieden und die zugrunde liegende Aufgabe gelöst.

## Patentansprüche

1. Batterieaufnahmevorrichtung (1),welche aufweist:
einen Batterieaufnahmeraum (2),
eine Wandung (4), welche den Batterieaufnahmeraum (2) wenigstens teilweise umgibt,
eine verschließbare erste Öffnung (5), welche der Wandung (4) zugeordnet ist,
und eine Batteriehalteeinrichtung (6), welche zum Halten wenigstens einer Batterie (3) vorgesehen und derart gestaltet ist, dass die wenigstens eine Batterie (3) bei vorbestimmten Bedingungen freigegeben wird,
**dadurch gekennzeichnet,**
**dass** der Batterieaufnahmeraum (2) auch zur Aufnahme eines auswechselbaren und der Aufnahme von Energie durch elastische oder plastische Verformung dienenden Verformungskörpers (9) vorgesehen ist.

2. Batterieaufnahmevorrichtung (1) gemäß Anspruch 1, **dadurch gekennzeichnet, dass** die Batteriehalteeinrichtung (6) zum Austausch von Wärmeenergie mit der wenigstens einen Batterie (3) vorgesehen ist.

3. Batterieaufnahmevorrichtung (1) gemäß mindestens einem der vorhergehenden Ansprüche, **dadurch gekennzeichnet, dass** die Batteriehalteeinrichtung (6) wenigstens teilweise, insbesondere vollständig in dem Batterieaufnahmeraum (2) angeordnet ist.

4. Batterieaufnahmevorrichtung (1) gemäß mindestens einem der vorhergehenden Ansprüche, **dadurch gekennzeichnet, dass** der Batterieaufnahmevorrichtung (1) ein Ausweichbereich (7) zugeordnet ist, welcher vorgesehen ist, wenigstens eine Batterie (3) wenigstens teilweise aufzunehmen.

5. Batterieaufnahmevorrichtung (1) gemäß mindestens einem der vorhergehenden Ansprüche, **dadurch gekennzeichnet, dass** die Wandung (4) weiter einen Durchlass (8) aufweist, welcher vorgesehen ist, der wenigstens einen Batterie bei vorbestimmten Bedingungen wenigstens teilweise den Austritt aus dem Batterieaufnahmeraum zu ermöglichen.

6. Batterieaufnahmevorrichtung (1) gemäß mindestens einem der vorhergehenden Ansprüche, **dadurch gekennzeichnet, dass** die Batterieaufnahmevorrichtung (1) sich im wesentlichen entlang einer Hauptausdehnungsrichtung erstreckt, und dass die Batterieaufnahmevorrichtung (1) zeitgleich mehrere Batterien (3) aufnimmt, welche insbesondere entlang der Hauptausdehnungsrichtung der Batterieaufnahmevorrichtung (1) angeordnet sind.

7. Kraftfahrzeug mit einer Batterieaufnahmevorrichtung (1) gemäß mindestens einem der vorhergehenden Ansprüche, **dadurch gekennzeichnet, dass** die Batterieaufnahmevorrichtung (1) der Bodengruppe des Kraftfahrzeugs zugeordnet ist.

8. Kraftfahrzeug mit einer Batterieaufnahmevorrichtung (1) gemäß mindestens einem der vorhergehenden Ansprüche, **dadurch gekennzeichnet, dass** die Wandung (4) der Batterieaufnahmevorrichtung (1) und/oder die Bodengruppe des Kraftfahrzeugs ein verstärktes Polymer aufweist.

9. Kraftfahrzeug mit einer Batterieaufnahmevorrichtung (1) gemäß mindestens einem der vorhergehenden Ansprüche, **dadurch gekennzeichnet, dass** der Massenschwerpunkt (10) der Batterieaufnahmevorrichtung (1) von dem Massenschwerpunkt (22) des Kraftfahrzeugs einen vorbestimmten Abstand aufweist,

10. Kraftfahrzeug mit einer Batterieaufnahmevorrichtung (1) gemäß einem der vorhergehenden Ansprüche, **dadurch gekennzeichnet, dass** die Hauptausdehnungsrichtung der Batterieaufnahmevorrichtung (1) im wesentlichen parallel zur Fahrtrichtung des Kraftfahrzeugs angeordnet ist,

11. Kraftfahrzeug mit einer Batterieaufnahmevorrichtung (1) gemäß mindestens einem der vorhergehenden Ansprüche, **dadurch gekennzeichnet, dass** der Ausweichbereich (7) in einem geschützten Bereich, vorzugsweise in einem rückwärtigen Bereich des Kraftfahrzeugs, besonders bevorzugt im Bereich des Kofferraums des Kraftfahrzeugs angeordnet ist.

12. Kraftfahrzeug mit einer Batterieaufnahmevorrichtung (1) gemäß mindestens einem der vorhergehenden Ansprüche, **dadurch gekennzeichnet, dass** das Kraftfahrzeug eine Klimatisierungseinrichtung aufweist, welche mit der Batteriehalteeinrichtung (6) zum Austausch von Wärmeenergie wirkverbunden ist.

13. Verfahren zum Betrieb einer Batterieaufnahmevorrichtung (1) gemäß mindestens einem der vorhergehenden Ansprüche, **dadurch gekennzeichnet,**
**dass** die Batteriehalteeinrichtung (6) bei vorbestimmten Bedingungen wenigstens eine Batterie freigibt,
**dass** sich die wenigstens eine Batterie (3) anschließend entsprechend der auf sie einwirkenden Kraft, insbesondere in Richtung des Ausweichraums bewegt,
und **dass** sich die Relativgeschwindigkeit zwischen der wenigstens einen Batterie (3) und dem Batterieaufnahmeraum (2) nach einem vorbestimmten Weg wieder verringert.

## Claims

1. A battery receiving apparatus (1) comprising:
a battery receiving chamber (2),
a wall (4) at least partially enclosing the battery receiving chamber (2),
a closable first opening (5) allocated to the wall (4),
and a battery retention device (6) provided to hold at least one battery (3) and configured such that the at least one battery (3) is released under predetermined conditions,
**characterized in that**
the battery receiving chamber (2) is also provided to receive a replaceable deformation body (9) which serves in absorbing energy by way of elastic or plastic deformation.

2. The battery receiving apparatus (1) according to claim 1, **characterized in that** the battery retention device (6) is provided for exchanging thermal energy with the at least one battery (3).

3. The battery receiving apparatus (1) according to at least one of the preceding claims, **characterized in that** the battery retention device (6) is at least partially, and in particular entirely, disposed within the battery receiving chamber (2).

4. The battery receiving apparatus (1) according to at least one of the preceding claims, **characterized in that** an escape area (7) provided to at least partially receive at least one battery (3) is allocated to said battery receiving apparatus (1).

5. The battery receiving apparatus (1) according to at least one of the preceding claims, **characterized in that** the wall (4) additionally comprises an outlet (8) which is provided to allow the at least one battery to at least partially exit the battery receiving chamber under predetermined conditions.

6. The battery receiving apparatus (1) according to at least one of the preceding claims, **characterized in that** the battery receiving apparatus (1) extends substantially along a main direction of extension and that the battery receiving apparatus (1) simultaneously accommodates a plurality of batteries (3) which are in particular arranged along the main direction of extension of said battery receiving apparatus (1).

7. A motor vehicle comprising a battery receiving apparatus (1) in accordance with at least one of the preceding claims, **characterized in that** the battery receiving apparatus (1) is allocated to the undercarriage of the motor vehicle.

8. The motor vehicle comprising a battery receiving apparatus (1) in accordance with at least one of the preceding claims, **characterized in that** the wall (4) of the battery receiving apparatus (1) and/or the undercarriage of the motor vehicle comprises a reinforced polymer.

9. The motor vehicle comprising a battery receiving apparatus (1) in accordance with at least one of the preceding claims, **characterized in that** the center of mass (10) of the battery receiving apparatus (1) exhibits a predetermined spacing from the center of mass (22) of the motor vehicle.

10. The motor vehicle comprising a battery receiving apparatus (1) in accordance with one of the preceding claims, **characterized in that** the main direction of extension of the battery receiving apparatus (1) is disposed substantially parallel to the motor vehicle's direction of travel.

11. The motor vehicle comprising a battery receiving apparatus (1) in accordance with at least one of the preceding claims, **characterized in that** the escape area (7) is arranged in a protected area, preferably in a rear area of the motor vehicle, particularly preferentially in the area of the motor vehicle's luggage compartment.

12. The motor vehicle comprising a battery receiving apparatus (1) in accordance with at least one of the preceding claims, **characterized in that** the motor vehicle comprises a climate control device operatively connected to the battery retention device (6) for the exchange of thermal energy.

13. A method of operating a battery receiving apparatus (1) in accordance with at least one of the preceding claims, **characterized in that**
the battery retention device (6) releases at least one battery under predetermined conditions,
the at least one battery (3) subsequently moves in accordance with the force acting thereon, particularly in the direction of the escape area, and that the relative velocity between the at least one battery (3) and the battery receiving chamber (2) decreases again after a predetermined displacement.

## Revendications

1. Système récepteur de batterie (1) comprenant :
un espace de réception de batterie (2),
une paroi (4) entourant au moins en partie l'espace de réception de batterie (2),
une première ouverture (5) que l'on peut refermer et associée à la paroi (4),
et un dispositif de retenue de batterie (6) conçu pour retenir au moins une batterie (3) et permettant de libérer la ou les batteries (3) dans certaines conditions préétablies,
**caractérisé en ce que**
l'espace de réception de batterie (2) est également conçu pour recevoir un corps de déformation (9) interchangeable et servant à recevoir l'énergie engendrée par la déformation élastique ou plastique.

2. Système récepteur de batterie (1) selon la revendication 1, **caractérisé en ce que** le dispositif de retenue de batterie (6) est conçu pour échanger une énergie calorifique avec la ou les batteries (3).

3. Système récepteur de batterie (1) selon au moins l'une quelconque des revendications précédentes, **caractérisé en ce que** le dispositif de retenue de batterie (6) est disposé au moins en partie, en particulier en totalité, dans l'espace de réception de batterie (2).

4. Système récepteur de batterie (1) selon au moins l'une des revendications précédentes, **caractérisé en ce qu'**une zone de déviation (7) destinée à recevoir au moins en partie au moins une batterie (3) est associée au système récepteur de batterie (1).

5. Système récepteur de batterie (1) selon au moins l'une des revendications précédentes, **caractérisé en ce que** la paroi (4) comprend en outre un passage (8) conçu pour permettre à la ou aux batteries de sortir au moins en partie de l'espace de réception de batterie dans certaines conditions préétablies.

6. Système récepteur de batterie (1) selon au moins l'une des revendications précédentes, **caractérisé en ce que** le système récepteur de batterie (1) s'étend sensiblement le long d'une direction d'étendue principale, et **en ce que** le système récepteur de batterie (1) reçoit en même temps plusieurs batteries (3) disposées en particulier le long de la direction d'étendue principale du système récepteur de batterie (1).

7. Véhicule automobile comprenant un système récepteur de batterie (1) selon au moins l'une des revendications précédentes, **caractérisé en ce que** le système récepteur de batterie (1) est associé au dessous de caisse du véhicule automobile.

8. Véhicule automobile comprenant un système récepteur de batterie (1) selon au moins l'une des revendications précédentes, **caractérisé en ce que** la paroi (4) du système récepteur de batterie (1) et/ou le dessous de caisse du véhicule automobile sont constitués d'un polymère renforcé.

9. Véhicule automobile comprenant un système récepteur de batterie (1) selon au moins l'une des revendications précédentes, **caractérisé en ce que** le centre de masse (10) du système récepteur de batterie (1) présente un écart prédéfini par rapport au centre de masse (22) du véhicule automobile.

10. Véhicule automobile comprenant un système récepteur de batterie (1) selon l'une des revendications précédentes, **caractérisé en ce que** la direction d'étendue principale du système récepteur de batterie (1) est sensiblement parallèle au sens de marche du véhicule automobile.

11. Véhicule automobile comprenant un système récepteur de batterie (1) selon au moins l'une des revendications précédentes, **caractérisé en ce que** la zone de déviation (7) est disposée dans une zone protégée, de préférence dans une zone arrière du véhicule automobile, de préférence encore dans la zone du coffre du véhicule automobile.

12. Véhicule automobile comprenant un système récepteur de batterie (1) selon au moins l'une des revendications précédentes, **caractérisé en ce que** le véhicule automobile comprend un dispositif de climatisation en liaison fonctionnelle avec le dispositif de retenue de batterie (6) pour échanger une énergie calorifique.

13. Procédé permettant de faire fonctionner un système récepteur de batterie (1) selon au moins l'une des revendications précédentes, **caractérisé en ce que**
le système de retenue de batterie (6) libère au moins une batterie dans certaines conditions préétablies,
la ou les batteries (3) se déplacent ensuite en fonction de la force agissant sur celles-ci, en particulier en direction de l'espace de déviation,
et **en ce que** la vitesse relative entre la ou les batteries (3) et l'espace de logement de batterie (2) se réduit à nouveau après un parcours préétabli.
